(19) Europäisches Patentamt
European Patent Office
Office européen des brevets

(11) **EP 2 516 877 B1**

(12) **EUROPÄISCHE PATENTSCHRIFT**

(45) Veröffentlichungstag und Bekanntmachung des Hinweises auf die Patenterteilung:
**23.07.2014 Patentblatt 2014/30**

(21) Anmeldenummer: **10787065.1**

(22) Anmeldetag: **24.11.2010**

(51) Int Cl.:
***F16D 48/06*** *(2006.01)*

(86) Internationale Anmeldenummer:
**PCT/EP2010/068077**

(87) Internationale Veröffentlichungsnummer:
**WO 2011/076509 (30.06.2011 Gazette 2011/26)**

(54) **VERFAHREN ZUR ADAPTION DER SCHNELLBEFÜLLZEIT EINER KUPPLUNG**

METHOD FOR ADAPTING THE RAPID FILLING TIME OF A CLUTCH

PROCÉDÉ D'ADAPTATION DU TEMPS DE REMPLISSAGE D'UN EMBRAYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2009 DE 102009055065**

(43) Veröffentlichungstag der Anmeldung:
**31.10.2012 Patentblatt 2012/44**

(73) Patentinhaber: **ZF Friedrichshafen AG**
**88038 Friedrichshafen (DE)**

(72) Erfinder:
• **BADER, Martin-Joachim**
**88284 Mochenwangen (DE)**
• **LOCHER, Karl**
**72539 Prongstetten-Tigerfeld (DE)**
• **MOSELER, Olaf**
**97440 Werneck (DE)**
• **TERWART, Markus**
**97711 Thundorf (DE)**
• **VETH, Frank**
**97723 Oberthulba (DE)**

(56) Entgegenhaltungen:
**DE-A1-102008 000 015 US-A1- 2009 209 383**
**US-H1- H2 031**

**Beschreibung**

Die Erfindung betrifft ein Verfahren zur Adaption der Schnellbefüllzeit einer Kupplung gemäß dem Oberbegriff des Anspruchs 1. Ein solches Verfahren ist aus DE-A-102 008 000 015 bekant.

Die Hauptkomponenten eines Antriebsstrangs eines Kraftfahrzeugs sind ein Antriebsaggregat und ein Getriebe, wobei das Getriebe des Antriebsstrangs zwischen das Antriebsaggregat und einen Abtrieb geschaltet ist. Das Getriebe wandelt Drehzahlen und Drehmomente und stellt so das Zugkraftangebot des Antriebsaggregats am Abtrieb des Antriebsstrangs bereit. Ein Getriebe umfasst Schaltelemente, wobei zur Ausführung einer Schaltung bzw. eines Gangwechsels mindestens ein Schaltelement geschlossen bzw. zugeschaltet und mindestens ein Schaltelement geöffnet bzw. weggeschaltet wird. Die Schaltelemente des Getriebes sind vorzugsweise als Kupplungen ausgeführt.

Zwischen die Schaltelemente des Getriebes und das Antriebsaggregat ist mindestens eine Anfahrkupplung geschaltet. Aus der DE 102 23 780 C1 ist ein Getriebe mit einer hydraulisch betätigten Mehrfachkupplung, nämlich einer hydraulisch betätigten Doppelkupplung bekannt, bei welchem also zwischen die Schaltelemente des Getriebes und das Antriebsaggregat mehrere Kupplungen geschaltet sind, die als Anfahrkupplung und/oder Schaltelement dienen.

Um eine hydraulisch betätigte Kupplung, die als Schaltelement und/oder als Anfahrkupplung dient, zu schließen, wird die Kupplung hydraulisch befüllt. Aus der DE 100 42 147 A1 ist es bereits bekannt, dass sich das Befüllen einer Kupplung in eine Schnellbefüllung bzw. Schnellfüllphase sowie eine Füllausgleichsbefüllung bzw. Füllausgleichsphase untergliedert, wobei sowohl in der Schnellbefüllung als auch in der Füllausgleichsbefüllung Befüllparameter adaptiert werden. Ein weiteres Verfahren zur Adaption der Befüllung von Schaltelementen eines Getriebes ist aus der DE 101 34 294 A1 bekannt.

Bei den aus dem Stand der Technik bekannten Verfahren zur Adaption der Befüllung einer Kupplung wird entweder auf eine Motordrehzahl bzw. Getriebeeingangsdrehzahl oder auf eine Turbinendrehzahl eines Wandlers zugegriffen. Hieraus folgt, dass ein Adaptionsergebnis von getriebeexternen Einflussgrößen abhängig ist.

Hiervon ausgehend liegt der vorliegenden Erfindung die Aufgabe zu Grunde, ein neuartiges Verfahren zur Adaption der Schnellbefüllzeit einer Kupplung zu schaffen. Diese Aufgabe wird durch ein Verfahren gemäß Anspruch 1 gelöst. Erfindungsgemäß wird zur Adaption der Schnellbefüllzeit die Kupplung mit aufeinanderfolgenden Schnellfüllimpulsen steigender Schnellbefüllzeit befüllt, wobei für jeden der Adaption dienenden Schnellfüllimpuls eine sich in Folge des jeweiligen Schnellfüllimpulses ausbildende Reaktion überwacht wird, wobei dann, wenn für einen dieser Schnellfüllimpulse eine definierte Reaktion erstmals erkannt wird, wohingegen für den oder jeden vorhergehenden Schnellfüllimpuls die definierte Reaktion nicht erkannt wurde, abhängig von der Schnellbefüllzeit desjenigen Schnellfüllimpulses, für den die definierte Reaktion erstmals erkannt wurde, die Adaption der Schnellbefüllzeit erfolgt, und wobei für jeden der Adaption dienenden Schnellfüllimpuls zur Ermittlung der definierten Reaktion Druckgradienten des sich in Folge des jeweiligen Schnellfüllimpulses ausbildenden Kupplungsdrucks ausgewertet werden. Der Schnellfüllimpuls hat vorzugsweise Rechteckform.

Mit dem erfindungsgemäßen Verfahren zur Adaption der Schnellbefüllzeit einer Kupplung ist es möglich, die Adaption unabhängig von getriebeexternen Einflussgrößen zu gestalten. Die Adaption erfolgt auf Grundlage von Schnellfüllimpulsen, wobei zur Adaption Druckgradienten des sich infolge der Schnellfüllimpulse ausbildenden Kupplungsdrucks ausgewertet werden. Zur Adaption werden demnach nur getriebeinterne Größen berücksichtigt, sodass die Adaption unabhängig von getriebeexternen Einflussgrößen und damit genauer ist.

Der Applikationsaufwand wird reduziert, da eine Anpassung der Adaption an Antriebsaggregate verschiedener Hersteller nicht erforderlich ist. Ferner ist die erfindungsgemäße Adaption der Schnellbefüllzeit für Fahrzeuginsassen nicht spürbar, wodurch der Fahrkomfort gesteigert wird.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

Fig. 1 ein erstes Diagramm zur Verdeutlichung des erfindungsgemäßen Verfahrens zur Adaption der Schnellbefüllzeit einer Kupplung;

Fig. 2 ein zweites Diagramm zur Verdeutlichung des erfindungsgemäßen Verfahrens;

Fig. 3 ein drittes Diagramm zur Verdeutlichung des erfindungsgemäßen Verfahrens;

Fig. 4 ein viertes Diagramm zur Verdeutlichung des erfindungsgemäßen Verfahrens; und

Fig. 5 ein fünftes Diagramm zur Verdeutlichung des erfindungsgemäßen Verfahrens.

Die hier vorliegende Erfindung betrifft ein Verfahren zur Adaption der Schnellbefüllzeit einer Kupplung eines Antriebsstrangs, insbesondere einer Kupplung eines Mehrfachkupplungsgetriebes, insbesondere eines Doppelkupplungsgetriebes. Durch die Adaption der Schnellbefüllzeit ist es möglich, Fertigungstoleranzen sowie Verschleiß auszugleichen und so über einen großen Betriebszeitraum eine gleichbleibende Fahrqualität und Schaltqualität in verschiedenen Betriebszuständen zu erreichen.

Zur Ausführung der Adaption der Schnellbefüllzeit wird zunächst vor Ausführung der Adaption überprüft, ob zur Ausführung der Adaption erforderliche Betriebsbedingungen erfüllt sind. Ist dies der Fall, so kann mit der Adaption der Schnellbefüllzeit begonnen werden. Ist dies hingegen nicht der Fall, so wird keine Adaption der Schnellbefüllzeit durchgeführt. Als Betriebsbedingung kann zum Beispiel überprüft werden, ob Sensoren, auf deren Messwerte bei der Adaption der Schnellbefüllzeit zugegriffen wird, ordnungsgemäß arbeiten.

Ferner wird zur Adaption der Schnellbefüllzeit für eine Kupplung bzw. an einer Kupplung derjenige Getriebeteil des Getriebes, in welchem die hinsichtlich der Schnellbefüllzeit zu adaptierende Kupplung verbaut ist, in eine Neutralposition überführt, um zu gewährleisten, dass sich die Adaption nicht auf das Fahrverhalten auswirkt und so für einen Fahrzeuginsassen nicht spürbar ist.

Im Anschluss an das Überprüfen der Adaptionsbedingungen sowie Überführen des relevanten Getriebeteils in eine Neutralposition erfolgt die Adaption der Schnellbefüllzeit dadurch, dass diejenige Kupplung, für welche die Adaption der Schnellbefüllzeit durchgeführt werden soll, mit aufeinanderfolgenden Schellfüllimpulsen steigender Schnellbefüllzeit befüllt wird. Für jeden dieser Schnellfüllimpulse, die der Adaption der Schnellbefüllzeit dienen, wird eine sich infolge des jeweiligen Schnellfüllimpulses ausbildende Reaktion überwacht. Dann, wenn die überwachte Reaktion einer definierten Reaktion entspricht, wird auf ein Durchschlagen der Schnellbefüllung geschlossen, in diesem Fall kann demnach die schnellbefüllte Kupplung Drehmoment übertragen.

Wird bereits für den ersten Schnellfüllimpuls die definierte Reaktion einer durchschlagenden Schnellbefüllung erkannt, so wird dieser Schnellfüllimpuls zur Adaption verworfen und als nachfolgender Schnellfüllimpuls ein Schnellfüllimpuls mit verringerter Schnellbefüllzeit verwendet, um so zu gewährleisten, dass für den ersten Schnellfüllimpuls der Adaption die definierte Reaktion im Sinne einer durchschlagenden Schnellbefüllung nicht erkannt wird.

Anschließend wird ausgehend von diesem ersten Schnellfüllimpuls der Adaption, für den die definierte Reaktion im Sinne einer durchschlagenden Schnellbefüllung nicht erkannt wurde, die Kupplung, für welche die Adaption der Schnellbefüllzeit durchzuführen ist, mit aufeinanderfolgenden Schnellfüllimpulsen steigender Schnellbefüllzeit befüllt und wiederum für jeden Schnellfüllimpuls die sich ausbildende Reaktion überwacht.

Ausgehend von dem ersten Schnellfüllimpuls mit definierter Schnellbefüllzeit, für den die definierte Reaktion nicht erkannt wurde, wird also nachfolgend die Kupplung mit aufeinanderfolgenden Schnellfüllimpulsen steigender Schnellbefüllzeit befüllt, wobei, wie bereits erwähnt, für jeden Schnellfüllimpuls die sich infolge des jeweiligen Schnellfüllimpulses ausbildende Reaktion überwacht wird. Dann, wenn für einen dieser Schnellfüllimpulse die definierte Reaktion im Sinne einer durchschlagenden Schnellbefüllung erstmals erkannt wird, wohingegen für mindestens einen vorhergehenden Schnellfüllimpuls die definierte Reaktion nicht erkannt wurde, erfolgt abhängig von der Schnellbefüllzeit desjenigen Schnellfüllimpulses, für den die definierte Reaktion erstmals erkannt wurde, die Adaption der Schnellbefüllzeit. Im Detail wird hierbei vorzugsweise derart vorgegangen, dass nachfolgend auf denjenigen Schnellfüllimpuls, für den die definierte Reaktion erstmals erkannt wird, zur Bestätigung der definierten Reaktion ein Schnellfüllimpuls mit identischer Schnellbefüllzeit folgt, wobei dann, wenn hierbei die definierte Reaktion bestätigt wird, auf den Schnellfüllimpuls mit identischer Schnellbefüllzeit ein Schnellfüllimpuls mit einer definiert verkürzten Schnellbefüllzeit folgt, die dann als Adaptionswert für die Schnellbefüllzeit verwendet wird, wenn für den Schnellfüllimpuls mit verkürzter Schnellbefüllzeit keine Reaktion erkannt wird. Die Adaption ist also von der Schnellbefüllzeit desjenigen Schnellfüllimpulses, für den die definierte Reaktion erstmals erkannt wurde, abhängig.

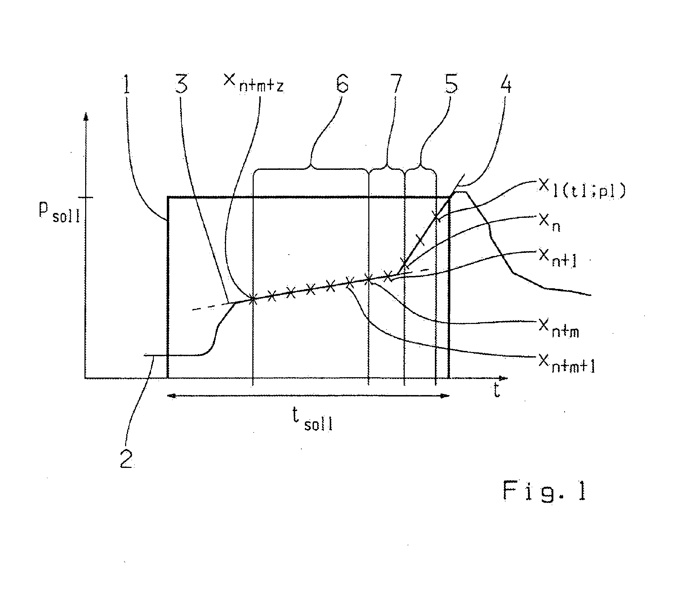

Es liegt im Sinne der hier vorliegenden Erfindung, für jeden der Adaption der Schnellbefüllzeit dienenden Schnellfüllimpuls die definierte Reaktion im Sinne einer durchschlagenden Schnellbefüllung auf Grundlage der Auswertung von Druckgradienten zu überwachen, nämlich auf Grundlage von Druckgradienten des sich infolge des jeweiligen Schnellfüllimpulses ausbildenden Kupplungsdrucks der Kupplung. Auf Details dieser Auswertung von Druckgradienten wird nachfolgend im Detail unter Bezugnahme auf Fig. 1 bis 3 eingegangen.

In Fig. 1 ist für einen exemplarischen Schnellfüllimpuls 1, der durch einen definierten Schnellfülldruck $p_{SOLL}$ und durch eine definierte Schnellbefüllzeit $t_{SOLL}$ gekennzeichnet ist, ein sich infolge des Schnellfüllimpulses tatsächlich ausbildender Kupplungsdruck 2 gezeigt. Weiterhin visualisiert Fig. 1, dass für den Schnellfüllimpuls 1 mehrere Messwerte $X_1$ bis $X_n$, $X_{n+1}$ bis $X_{n+m}$, $X_{n+m+1}$ bis $X_{n+m+z}$ des sich tatsächlich ausbildenden Kupplungsdrucks 2 erfasst werden, wobei jeder Messwert $X_i = X_i(t_i; p_i)$; i=1 bis n+m+z einen zu einer Zeit $t_i$ erfassten Druck $p_i$ umfasst.

Die erfassten Messwerte X des sich tatsächlich ausbildenden Kupplungsdrucks 2 werden in einen Ringspeicher einer definierten Speichergröße gespeichert, wobei dann, wenn der Ringspeicher mit Messwerten vollständig befüllt ist und ein neuer Messwert hinzukommt, der jeweils älteste im Ringspeicher gespeicherte Messwert gelöscht wird.

Auf Grundlage der im Ringspeicher gespeicherten Messwerte werden für jeden Schnellfüllimpuls 1, welcher der Adaption der Schnellbefüllzeit dient, einerseits Referenzdruckgradienten 3 und andererseits Reaktionsdruckgradienten 4 ermittelt, wobei dann, wenn innerhalb eines definierten Auswertezeitraums bzw. Auswertefensters für den jeweiligen Schnellfüllimpuls der Reaktionsgradient 4 um einen definierten Faktor oder Betrag größer als der Referenzdruckgradient 3 ist, für den jeweiligen Schnellfüllimpuls 1 das Ausbilden der definierten Reaktion im Sinne einer durchschlagenden Schnellbefüllung erkannt wird.

Im Diagramm der Fig. 1 ist der Reaktionsgradient 4 deutlich größer als der Referenzdruckgradient 3, sodass für den Schnellfüllimpuls 1 der Fig. 1 exemplarisch davon ausgegangen werden kann, dass eine definierte Reaktion im Sinne einer durchschlagenden Schnellbefüllung vorliegt.

Wie bereits erwähnt, erfolgt die Erfassung der Reaktionsdruckgradienten 4 sowie Referenzdruckgradienten 3 für jeden Schnellfüllimpuls unter Verwendung der im Ringspeicher gespeicherten Messwerte, wobei hierbei so vorgegangen wird, dass die im Ringspeicher gespeicherten Messwerte des sich tatsächlich ausbildenden Kupplungsdrucks 2 in mindestens zwei Gruppen untergliedert sind. Eine erste Gruppe 5 von Messwerten des sich tatsächlich ausbildenden Kupplungsdrucks 2, nämlich jeweils die jüngsten Messwerte im Ringspeicher, dienen der Bestimmung der Reaktionsgradienten 4. Dies sind im Ausführungsbeispiel der Fig. 1 die Messwerte $X_1$ bis $X_n$. Eine zweite Gruppe 6 von Messwerten, nämlich jeweils die ältesten im Ringspeicher gespeicherten Messwerte, dienen der Verwendung der Referenzdruckgradienten 3. Im gezeigten Ausführungsbeispiel handelt es sich hierbei um die Messwerte $X_{n+m+1}$ bis $X_{n+m+z}$.

Fig. 1 kann weiterhin entnommen werden, dass zwischen der ersten Gruppe 5 der im Ringspeicher gespeicherten Messwerte und der zweiten Gruppe 6 der im Ringspeicher gespeicherten Messwerte eine dritte Gruppe 7 von im Ringspeicher gespeicherten Messwerten liegt, die bei der Bestimmung der Referenzdruckgradienten 3 und Reaktionsdruckgradienten 4 nicht berücksichtigt werden, wobei es sich bei diesen Messwerten demnach um Messwerte handelt, die zeitlich zwischen den jüngsten Messwerten der ersten Gruppe 5 und den ältesten Messwerten der zweiten Gruppe 6 erfasst wurden. Im gezeigten Ausführungsbeispiel handelt es sich hierbei um die Messwerte $X_{n+m+1}$ bis $X_{n+m}$.

Die Größe des Ringspeichers entspricht der Summe der Messwerte der drei Gruppen 5, 6 und 7.

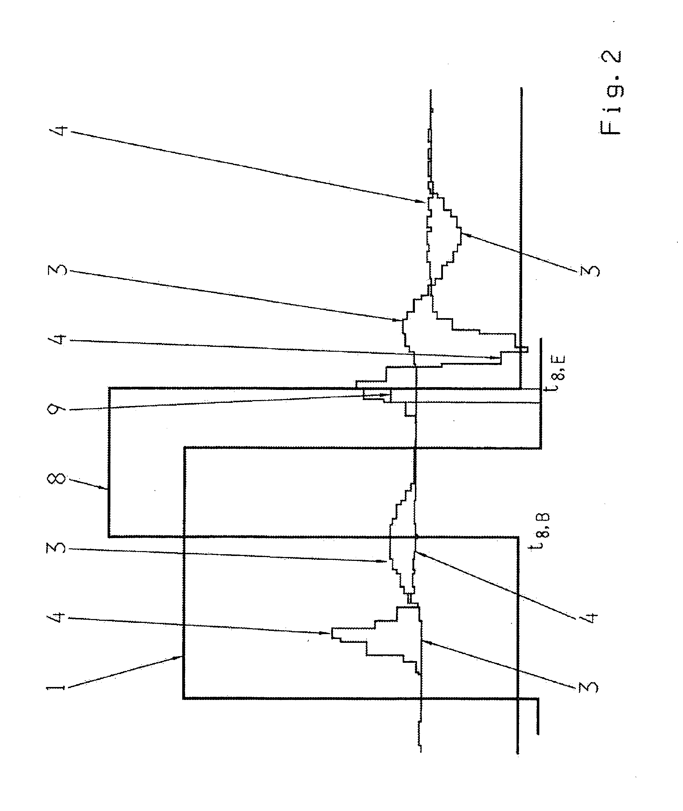

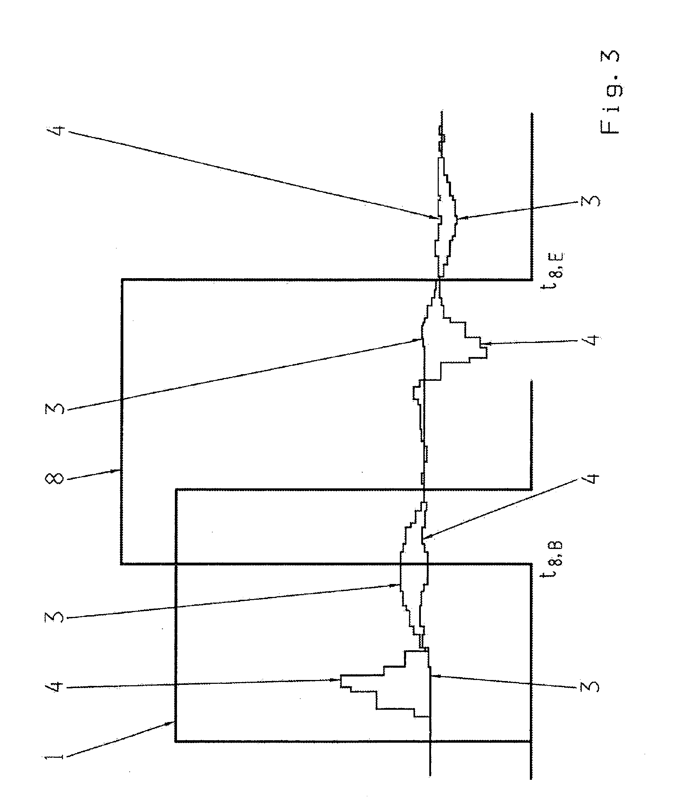

Wie bereits ausgeführt, werden bei der Adaption der Schnellbefüllzeit für jeden der Adaption dienenden Schnellfüllimpuls einerseits Referenzdruckgradienten und andererseits Reaktionsdruckgradienten ermittelt, nämlich fortlaufend über die zeitliche Erstreckung des jeweiligen Schnellfüllimpulses sowie zeitlich anschließend an dem jeweiligen Schnellfüllimpuls, wie dies aus den zeitlichen Kurvenverläufen der Fig. 2 und 3 gezeigt ist. So sind in den Fig. 2 und 3 über der Zeit jeweils zeitliche Verläufe eines Schnellfülldruckimpulses 1, eines Referenzdruckgradienten 3 sowie eines Reaktionsdruckgradienten 4 gezeigt, wobei die Auswertung derselben zur Ermittlung der definierten Reaktion innerhalb eines definierten Auswertezeitraums 8 erfolgt. Bei der Ermittlung der Referenzdruckgradienten 3 sowie Reaktionsdruckgradienten 4 wird dabei auf die jeweils im Ringspeicher gespeicherten Messwerte des sich tatsächlich ausbildenden Kupplungsdrucks 2 zugegriffen, wobei, wie bereits erwähnt, bei Aufnahme eines neuen Messwerts in den Ringspeicher der jeweils älteste Messwert des Ringspeichers gelöscht wird.

Der Auswertezeitraum 8, innerhalb dessen der Referenzdruckgradient 3 und Reaktionsdruckgradient 4 zur Ermittlung der definierten Reaktion im Sinne einer durchschlagenden Schnellbefüllung ausgewertet werden, ist durch einen Beginn $t_{8,B}$ und ein Ende $t_{8,E}$ definiert. Der Auswertezeitraum 8 beginnt dann zum Zeitpunkt $t_{8,B}$, wenn während des Schnellfüllimpulses 1 der Referenzdruckgradient 3 und/oder der Reaktionsdruckgradient 4 einen definierten Wert überschreitet und wenn weiterhin der gemessene Kupplungsdruck 2 einen definierten Wert, nämlich einen definierten Mindestdruck, überschreitet und wenn außerdem der Referenzdruckgradient 3 und/oder der Reaktionsdruckgradient 4 einen definierten Wert, nämlich ein lokales Maximum, unterschreitet.

Wie Fig. 2 und 3 entnommen werden kann, liegt der Beginn der Auswertezeiträume 8 jeweils zu dem Zeitpunkt $t_{8,B}$, in welchem der Referenzdruckgradient 3 sein lokales Maximum unterschreitet.

Im Diagramm der Fig. 3 wird während des Auswertezeitraums 8 die definierte Reaktion im Sinne einer durchschlagenden Schnellbefüllung nicht erkannt, sodass dann der Auswertezeitraum 8 dann zu dem Zeitpunkt $t_{8,E}$ endet, wenn der Referenzdruckgradient 3 und/oder der Reaktionsdruckgradient 4 einen negativen Wert annimmt. In Fig. 3 nimmt der Referenzdruckgradient 3 einen negativen Wert zum Ende des Auswertezeitraums 8 an.

In Fig. 2 wird hingegen eine definierte Reaktion 9 im Sinne einer durchschlagenden Schnellbefüllung erkannt, sodass in Fig. 2 mit Erkennen der definierten Reaktion 9 zu dem Zeitpunkt $t_{8,E}$ das Auswertefenster bzw. der Auswertezeitraum 8 für diesen Schnellfüllimpuls 1 endet.

Zur Ermittlung bzw. Berechnung der Reaktionsdruckgradienten 4 aus den Messwerten $X_i = X_i(t_i; p_i)$; i=1 bis n der ersten Gruppe 5 der im Ringspeicher gespeicherten Messwerte kann so vorgegangen werden, dass aus diesen Messwerten ein Mittelwert errechnet wird. Wie bereits ausgeführt, umfasst die erste Gruppe 5 von Messwerten im Ringspeicher, die zur Ermittlung des Reaktionsdruckgradienten 4 verwendet wird, die Messwerte $X_1$ bis $X_n$, sodass sich bei einer Mittelwertbildung der Reaktionsgradient $GRADIENT_{REAKTION}$ aus folgender Formel ergibt:

$$GRADIENT_{REAKTION} = \frac{\sum_{i=1}^{n}(p_i - p_{i+1})}{n} * k$$

wobei k ein zeitlicher Abtastfaktor der Messwerterfassung ist.

Die Referenzgradienten $GRADIENT_{REFRENZ}$ werden aus den Messwerten $X_i = X_i(t_i; p_i)$; i=n+m+1 bis n+m+z der zweiten Gruppe 6 der im Ringspeicher gespeicherten Messwerte ermittelt, und zwar entweder über eine Mittelwertbildung dieser Messwerte oder über eine Bildung eines linearen Regressionswerts dieser Messwerte. Dabei umfasst die zweite Gruppe 6 von Messwerten, die zur Ermittlung des Referenzdruckgradienten verwendet werden, die Mess-werte $X_{n+m+1}$ bis $X_{n+m+z}$.

Dann, wenn zur Errechnung der Referenzdruckgradienten 3 ebenfalls ein Mittelwert gebildet wird, ergibt sich der jeweilige Referenzdruckgradient GRADIENT$_{REFRENZ}$ unter Verwendung der folgenden Formel:

$$GRADIENT_{REFERENZ} = \frac{\sum\limits_{i=n+m+1}^{n+m+z}(p_i - p_{i+1})}{z} * k$$

Dann hingegen, wenn die Referenzdruckgradienten 3 über die Bildung eines linearen Regressionswerts der Messwerte der zweiten Gruppe 6 bestimmt wird, ergibt sich der jeweilige Referenzdruckgradient GRADIENT$_{REFRENZ}$ aus folgender Formel:

$$GRADIENT_{REFERENZ} = \frac{\sum\limits_{i=n+m+1}^{n+m+z}(t_i - t')*(p_i - p')}{\sum\limits_{i=n+m+1}^{n+m+z}(t_i - t')^2} * k$$

wobei gilt

$$t' = \frac{\sum\limits_{i=n+m+1}^{n+m+z}t_i}{z} , \quad p' = \frac{\sum\limits_{i=n+m+1}^{n+m+z}p_i}{z} .$$

Dann, wenn innerhalb des definierten Auswertezeitraums bzw. Auswertefensters 8 für den jeweiligen Schnellfüllimpuls der Reaktionsgradient 4 um einen definierten Faktor größer als der Referenzdruckgradient 3 ist, wird für den jeweiligen Schnellfüllimpuls 1 das Ausbilden der definierten Reaktion im Sinne einer durchschlagenden Schnellbefüllung erkannt.

Die erfindungsgemäße Adaption der Schnellbefüllzeit kann auch unterbrochen werden. Dies kann zum Beispiel dann der Fall sein, wenn für eine Adaption der Schnellbefüllzeit keine gültigen Adaptionsbedingungen mehr vorliegen oder wenn ein Kraftfahrzeug abgestellt wird. In diesem Fall kann vorgesehen sein, dass bisherige Adaptionsergebnisse gespeichert werden und dass nach Aufhebung der Unterbrechung der Adaption dieselbe fortgesetzt wird. In diesem Fall kann dann eine unterbrochene Adaption beendet werden. Es ist demnach nicht erforderlich, eine Adaption zwingend innerhalb eines Fahrzyklus beenden zu müssen. Vielmehr werden bei Unterbrechung einer Adaption Werte abgespeichert und bei einer Adaptionsfortführung entsprechend weiterverwendet.

Es kann im Sinne der Erfindung vorgesehen sein, dass der sich infolge des jeweiligen Schnellfüllimpulses ausbildende Kupplungsdruck weiterhin zur Detektion eines möglichen Kupplungsklemmens ausgewertet wird, wobei dann, wenn ein Kupplungsklemmen bzw. ein Klemmen eines Kupplungskolbens detektiert wird, keine Adaption der Schnellbefüllzeit folgt.

Ein Kupplungsklemmen kann dadurch erkannt werden, wenn vor dem Auswertezeitraum für die Gradienten des tatsächlichen Kupplungsdrucks der Kupplungsdruck eine vom Anlagedruck der Kupplung abhängige Schwelle überschreitet.

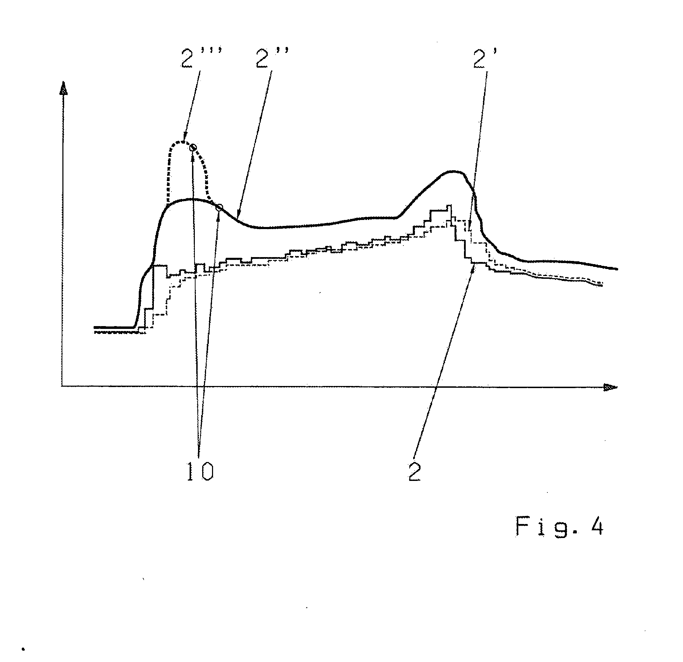

Eine weitere Möglichkeit zur Erkennung eines Kupplungsklemmens ergibt sich aus Fig. 4. So sind in Fig. 4 über der Zeit t ein tatsächlicher Kupplungsdruck 2, ein gefilterter Kupplungsdruck 2' bei einem nicht klemmenden Kupplungskolben und gefilterte Kupplungsdrücke 2" und 2''' bei einem klemmenden Kupplungskolben gezeigt. Nimmt der Kupplungsdruck während eines Schnellfüllimpulses ab, deutet dies auf einen klemmenden Kupplungskolben hin, der sich nach Überwinden des Klemmens in Bewegung setzt. Ähnlich verhält es sich, wenn der Referenzdruckgradient während eines Schnellfüllimpulses einen negativen Wert annimmt. In Fig. 4 sind Zustände 10 gekennzeichnet, in welchen der gefilterte Kupplungsdruck während eines Schnellfüllimpulses abnimmt, in welchen also auf ein Kupplungsklemmen geschlossen werden kann.

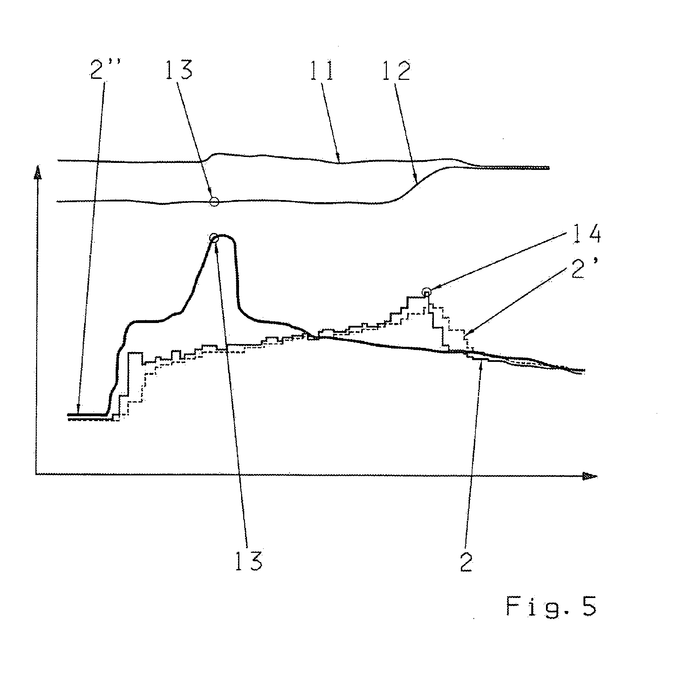

Eine weitere Möglichkeit zur Detektion eines klemmenden Kupplungskolbens ergibt sich aus Fig. 5, wobei in Fig. 5 über der Zeit t ein tatsächlicher Kupplungsdruck 2, ein gefilterter Kupplungsdruck 2' bei nicht klemmendem Kupplungskolben sowie ein gefilterter Kupplungsdruck 2" bei klemmendem Kupplungskolben aufgetragen sind, zusammen mit zeitlichen Verläufen einer Motordrehzahl 11 und einer Getriebeeingangsdrehzahl 12. In der Variante der Fig. 5 erfolgt demnach die Detektion eines klemmenden Kupplungskolbens unter Verwendung der Motordrehzahl 11 und der Getriebeeingangsdrehzahl 12, wobei dann, wenn eine applizierbare Druckschwelle und ein entsprechender applizierbarer Druckgradient überschritten werden und keine Reaktion an der Getriebeeingangsdrehzahl 12 erkannt wird, auf einen klemmenden Kupplungskolben geschlossen werden kann. Bei einer befüllten Kupplung nähert sich nämlich die Getriebeeingangsdrehzahl 12 der Motordrehzahl 11 an. Der Zustand 13 im Diagramm der Fig. 5 zeigt eine beispielhafte Darstellung eines klemmenden Kupplungskolbens. Der Zustand 14 entspricht einer durchschlagenden Schnellbefüllung.

Bezugszeichen

1 Schnellfüllimpuls
2 Kupplungsdruck
3 Referenzdruckgradient
4 Reaktionsdruckgradient
5 Gruppe
6 Gruppe
7 Gruppe
8 Auswertezeitraum
9 definierte Reaktion
10 Zustand
11 Motordrehzahl
12 Getriebeeingangsdrehzahl
13 Zustand
14 Zustand

**Patentansprüche**

1. Verfahren zur Adaption der Schnellbefüllzeit einer Kupplung eines Antriebsstrangs, **dadurch gekennzeichnet, dass** zur Adaption die Kupplung mit zumindest zwei aufeinanderfolgenden Schnellfüllimpulsen steigender Schnellbefüllzeit befüllt wird, dass für jeden der Adaption dienenden Schnellfüllimpuls eine sich in Folge des jeweiligen Schnellfüllimpulses ausbildende Reaktion überwacht wird, dass dann, wenn für einen dieser Schnellfüllimpulse eine definierte Reaktion erstmals erkannt wird, wohingegen für den oder jeden vorhergehenden Schnellfüllimpuls die definierte Reaktion nicht erkannt wurde, abhängig von der Schnellbefüllzeit desjenigen Schnellfüllimpulses, für den die definierte Reaktion erstmals erkannt wurde, die Adaption der Schnellbefüllzeit erfolgt, und dass für jeden der Adaption dienenden Schnellfüllimpuls zur Ermittlung der definierten Reaktion Druckgradienten des sich in Folge des jeweiligen Schnellfüllimpulses ausbildenden Kupplungsdrucks ausgewertet werden.

2. Verfahren nach Anspruch 1, **dadurch gekennzeichnet, dass** für jeden der Adaption dienenden Schnellfüllimpuls mehrere Messwerte des sich ausbildenden Kupplungsdrucks erfasst und in einem Ringspeicher gespeichert werden, dass aus diesen Messwerten für jeden der Adaption dienenden Schnellfüllimpulse einerseits Referenzdruckgradienten und andererseits Reaktionsdruckgradienten ermittelt werden, und dass dann, wenn innerhalb eines definierten Auswertezeitraums der Reaktionsdruckgradient um einen definierten Faktor oder Betrag größer oder kleiner als der Referenzdruckgradient ist, für den jeweiligen Schnellfüllimpuls auf das Ausbilden der definierten Reaktion erkannt wird.

3. Verfahren nach Anspruch 2, **dadurch gekennzeichnet, dass** aus den erfassten und im Ringspeicher gespeicherten Messwerten des Kupplungsdrucks eine erste Gruppe von Messwerten zur Bestimmung der Reaktionsdruckgradienten und ein zweite Gruppe von Messwerten zur Bestimmung der Referenzdruckgradienten verwendet wird.

**4.** Verfahren nach Anspruch 2 oder 3, **dadurch gekennzeichnet, dass** für jeden der Adaption dienenden Schnellfüllimpuls der Auswertezeitraum derart ermittelt wird, dass der Auswertezeitraum dann beginnt, wenn während des Schnellfüllimpulses der Referenzdruckgradient und/oder der Reaktionsdruckgradient einen definierten Wert überschreitet und weiterhin der gemessene Kupplungsdruck einen definierten Wert überschreitet und außerdem der Referenzdruckgradient und/oder der Reaktionsdruckgradient einen definierten Wert unterschreitet, und dass der Auswertezeitraum dann endet, wenn entweder auf das Ausbilden der definierten Reaktion erkannt wird oder der Referenzdruckgradient und/oder der Reaktionsdruckgradient einen negativen Wert annimmt.

**5.** Verfahren nach einem der Ansprüche 2 bis 4, **dadurch gekennzeichnet, dass** die Reaktionsdruckgradienten aus der erste Gruppe der erfassten und im Ringspeicher gespeicherten Messwerte derart ermittelt wird, dass ein Mittelwert dieser Messwerte gebildet wird.

**6.** Verfahren nach einem der Ansprüche 2 bis 5, **dadurch gekennzeichnet, dass** die Referenzdruckgradienten aus der zweiten Gruppe der erfassten und im Ringspeicher gespeicherten Messwerte derart ermittelt wird, dass ein Mittelwert dieser Messwerte gebildet wird.

**7.** Verfahren nach einem der Ansprüche 2 bis 5, **dadurch gekennzeichnet, dass** die Referenzdruckgradienten aus der zweiten Gruppe der erfassten und im Ringspeicher gespeicherten Messwerte derart ermittelt wird, dass ein linearer Regressionswert dieser Messwerte gebildet wird.

**8.** Verfahren nach einem der Ansprüche 3 bis 7, **dadurch gekennzeichnet, dass** zwischen der ersten Gruppe von Messwerten und der zweiten Gruppe von Messwerten mindestens ein nicht für die Auswertung der Druckgradienten verwendeter Messwert liegt.

**9.** Verfahren nach einem der Ansprüche 1 bis 8, **dadurch gekennzeichnet, dass** dann, wenn für einen dieser Schnellfüllimpulse eine definierte Reaktion erstmals erkannt wird, auf diesen Schnellfüllimpuls zur Bestätigung der definierten Reaktion ein Schnellfüllimpuls mit identischer Schnellbefüllzeit folgt, und wobei dann, wenn hierbei die definierte Reaktion bestätigt wird, ein Schnellfüllimpuls mit einer definiert verkürzten Schnellbefüllzeit folgt, die dann zur Adaption verwendet wird, wenn für den Schnellfüllimpuls mit der verkürzten Schnellbefüllzeit keine Reaktion erkannt wird.

**10.** Verfahren nach einem der Ansprüche 1 bis 9, **dadurch gekennzeichnet, dass** die Adaption der Schnellbefüllzeit für eine bzw. an einer Kupplung durchgeführt wird, die einem an der Drehmomentübertragung aktuell nicht beteiligten Getriebeteil zugeordnet ist, wobei hierzu dieses Getriebeteil in eine Neutralposition überführt wird, und dass vor Ausführung der Adaption der Schnellbefüllzeit überprüft wird, ob zur Ausführung der Adaption erforderliche Betriebsbedingungen erfüllt sind.

**11.** Verfahren nach einem der Ansprüche 1 bis 10, **dadurch gekennzeichnet, dass** dann, wenn dasselbe während der Ausführung unterbrochen wird, bisherige Ergebnisse gespeichert werden und dasselbe nach Aufhebung der Unterbrechung fortgesetzt wird.

**12.** Verfahren nach einem der Ansprüche 1 bis 11, **dadurch gekennzeichnet, dass** der sich in Folge des jeweiligen Schnellfüllimpulses ausbildende Kupplungsdruck weiterhin zur Detektion eines Kupplungsklemmens ausgewertet wird, und dass dann, wenn ein Kupplungsklemmen detektiert wird, keine Adaption der Schnellbefüllzeit erfolgt.

**Claims**

**1.** Method for adapting the rapid filling time of a clutch of a drive train, **characterized in that** in order to perform adaptation the clutch is filled with at least two successive rapid filling pulses with an increasing rapid filling time, **in that** for each rapid filling pulse which serves for the purpose of adaptation a reaction which is formed as a consequence of the respective rapid filling pulse is monitored, **in that** when a defined reaction is firstly detected for one of these rapid filling pulses while the defined reaction is not detected for the or for each preceding rapid filling pulse, the rapid filling time is adapted as a function of the rapid filling time of that rapid filling pulse for which the defined reaction is first detected, and **in that** pressure gradients of the clutch pressure which forms as a consequence of the respective rapid filling pulse are evaluated for each rapid filling pulse which serves for the purpose of adaptation, in order to determine the defined reaction.

**2.** Method according to Claim 1, **characterized in that** a plurality of measured values of the clutch pressure which is formed are acquired for each rapid filling pulse which serves for the purpose of adaptation, and are stored in a ring memory, **in that**, on the one hand, reference pressure gradients and, on the other hand, reaction pressure gradients are determined from these measured values for each rapid filling pulse which serves for the purpose of adaptation, and **in that** the formation of the defined reaction is detected for the respective rapid filling pulse if the reaction pressure gradient is larger or smaller than the reference pressure gradient by a defined factor or absolute value within a defined evaluation time period.

**3.** Method according to Claim 2, **characterized in that**, of the measured values of the clutch pressure which are acquired and stored in the ring memory, a first group of measured values is used for determining the reaction pressure gradients and a second group of measured values is used for determining the reference pressure gradients.

**4.** Method according to Claim 2 or 3, **characterized in that** the evaluation time period is determined for each rapid filling pulse which serves for the purpose of adaptation, **in that** the evaluation time period starts when the reference pressure gradient and/or the reaction pressure gradient exceeds a defined value during the rapid filling pulse, and the measured clutch pressure also exceeds a defined value, and furthermore the reference pressure gradient and/or the reaction pressure gradient undershoot/undershoots a defined value, and **in that** the evaluation time period ends when either the formation of the defined reaction is detected or the reference pressure gradient and/or the reaction pressure gradient assume/assumes a negative value.

**5.** Method according to one of Claims 2 to 4, **characterized in that** the reaction pressure gradients from the first group of measured values which are acquired and stored in the ring memory are determined in such a way that a mean value of these measured values is formed.

**6.** Method according to one of Claims 2 to 5, **characterized in that** the reference pressure gradients from the second group of the measured values which are acquired and stored in the ring memory are determined in such a way that a mean value of these measured values is formed.

**7.** Method according to one of Claims 2 to 5, **characterized in that** the reference pressure gradients from the second group of the measured values which are acquired and stored in the ring memory are determined in such a way that a linear regression value of these measured values is formed.

**8.** Method according to one of Claims 3 to 7, **characterized in that** at least one measured value which is not used for the evaluation of the pressure gradients is located between the first group of measured values and the second group of measured values.

**9.** Method according to one of Claims 1 to 8, **characterized in that** when a defined reaction is first detected for one of these rapid filling pulses, the rapid filling pulse with an identical rapid filling time follows this rapid filling pulse in order to confirm the defined reaction, and wherein when in this context the defined reaction is confirmed a rapid filling pulse with a rapid filling time which is shortened in a defined fashion follows and is then used for the purpose of adaptation if no reaction is detected for the rapid filling pulse with the shortened rapid filling time.

**10.** Method according to one of Claims 1 to 9, **characterized in that** the adaptation of the rapid filling time is carried out for a clutch or at a clutch which is assigned to a transmission component which is currently not involved in the transmission of torque, wherein for this purpose this transmission component is changed to a neutral position, and **in that** before the adaptation of the rapid filling time is carried out it is checked whether operating conditions which are necessary to carry out the adaptation are satisfied.

**11.** Method according to one of Claims 1 to 10, **characterized in that** when said method is interrupted during the execution, previous results are stored and said method is continued after the interruption has been eliminated.

**12.** Method according to one of Claims 1 to 11, **characterized in that** the clutch pressure which forms as a consequence of the respective rapid filling pulse is also evaluated for the purpose of detecting sticking of the clutch, and **in that** if sticking of the clutch is detected the rapid filling time is not adapted.

**Revendications**

1. Procédé d'adaptation de la durée de remplissage rapide d'un embrayage de train d'entraînement, **caractérisé en ce que**
pour l'adaptation, l'embrayage est rempli par au moins deux impulsions successives de remplissage rapide de durée de remplissage rapide croissante,
**en ce que** la réaction qui s'établit à la suite de chaque impulsion de remplissage rapide est surveillée pour chaque impulsion de remplissage rapide qui sert à l'adaptation,
**en ce qu'**ensuite, si une réaction définie est détectée pour la première fois pour l'une de ces impulsions de remplissage rapide alors que la réaction définie n'a pas été détectée pour les impulsions ou chaque impulsion précédente de remplissage rapide, l'adaptation de la durée de remplissage rapide a lieu en fonction de la durée de remplissage rapide de l'impulsion de remplissage rapide pour laquelle la réaction définie a été détectée pour la première fois et
**en ce que** pour déterminer la réaction définie, les gradients de pression de l'embrayage qui se forment suite à chaque impulsion de remplissage rapide sont évalués pour chaque impulsion de remplissage rapide qui sert à l'adaptation.

2. Procédé selon la revendication 1, **caractérisé en ce que** plusieurs valeurs de mesure de la pression de l'embrayage qui s'établit sont détectées pour chaque impulsion de remplissage rapide qui sert à l'adaptation et conservées dans une mémoire cyclique,
**en ce que** des gradients de pression de référence et des gradients de pression de réaction sont déterminés à partir de ces valeurs de mesure pour chacune des impulsions de remplissage rapide qui servent à l'adaptation et
**en ce que** si le gradient de pression de réaction est d'un facteur ou d'un niveau définis supérieurs ou inférieurs au gradient de pression de référence à l'intérieur d'une durée définie d'évaluation, l'établissement de la réaction défini est détecté pour cette impulsion de remplissage rapide.

3. Procédé selon la revendication 2, **caractérisé en ce qu'**à partir des valeurs de mesure saisies et des valeurs de mesure conservées dans la mémoire cyclique pour la pression d'embrayage, un premier groupe de valeurs de mesure est utilisé pour déterminer les gradients de pression de réaction et un deuxième groupe de valeurs de mesure est utilisé pour déterminer les gradients de pression de référence.

4. Procédé selon les revendications 2 ou 3, **caractérisé en ce que** pour chacune des impulsions de remplissage rapide servant à l'adaptation, la durée d'évaluation est déterminée de telle sorte que la durée d'évaluation commence si pendant l'impulsion de remplissage rapide, le gradient de pression de référence et/ou le gradient de pression de réaction dépassent une valeur définie et qu'en outre la pression d'embrayage mesurée dépasse une valeur définie et que de plus le gradient de pression de référence et/ou le gradient de pression de réaction n'atteignent pas une valeur définie, et **en ce que** la durée d'évaluation se termine si la formation de la réaction définie a été détectée ou si le gradient de pression de référence et/ou le gradient de pression de réaction prennent une valeur négative.

5. Procédé selon l'une des revendications 2 à 4, **caractérisé en ce que** les gradients de pression de réaction sont déterminés à partir du premier groupe de valeurs de mesure saisies et de valeurs de mesure conservées dans la mémoire cyclique en formant la valeur moyenne de ces valeurs de mesure.

6. Procédé selon l'une des revendications 2 à 5, **caractérisé en ce que** les gradients de pression de référence sont déterminés à partir du deuxième groupe de valeurs de mesure saisies et de valeurs de mesure conservées dans la mémoire cyclique en formant la valeur moyenne de ces valeurs de mesure.

7. Procédé selon l'une des revendications 2 à 5, **caractérisé en ce que** les gradients de pression de référence sont déterminés à partir du deuxième groupe de valeurs de mesure saisies et de valeurs de mesure conservées dans la mémoire cyclique en formant une valeur de régression linéaire de ces valeurs de mesure.

8. Procédé selon l'une des revendications 3 à 7, **caractérisé en ce qu'**au moins une valeur de mesure utilisée pour l'évaluation des gradients de pression est située entre le premier groupe de valeurs de mesure et le deuxième groupe de valeurs de mesure.

9. Procédé selon l'une des revendications 1 à 8, **caractérisé en ce que** si une réaction définie est détectée pour la première fois pour une des impulsions de remplissage rapide, une impulsion de remplissage rapide présentant la même durée de remplissage rapide suit cette impulsion de remplissage rapide pour confirmer la réaction définie et si la réaction définie est alors constatée, une impulsion de remplissage rapide qui présente une durée raccourcie de manière définie du remplissage rapide suit et est ensuite utilisée pour l'adaptation si aucune réaction n'est détectée à l'impulsion de remplissage rapide qui présente la durée de remplissage rapide raccourcie.

10. Procédé selon l'une des revendications 1 à 9, **caractérisé en ce que** l'adaptation de la durée de remplissage rapide est exécutée pour un embrayage sur un embrayage qui est associé à une partie d'entraînement qui à ce moment ne participe pas au transfert d'un couple de rotation, cette partie de l'entraînement étant dans ce but amenée dans une position neutre et **en ce qu'**avant l'exécution de l'adaptation de la durée de remplissage rapide, on vérifie si les conditions de fonctionnement nécessaires pour exécuter l'adaptation sont remplies.

11. Procédé selon l'une des revendications 1 à 10, **caractérisé en ce que** si son exécution est interrompue, les résultats obtenus jusqu'à l'interruption sont conservés en mémoire et l'exécution est reprise après suppression de l'interruption.

12. Procédé selon l'une des revendications 1 à 11, **caractérisé en ce que** la pression d'embrayage qui s'établit suite à chaque impulsion de remplissage rapide est de plus évaluée pour détecter un coinçage de l'embrayage et **en ce que** si un coinçage de l'embrayage est détecté, aucune adaptation de la durée de remplissage rapide n'est effectuée.

Fig. 1

Fig. 2

EP 2 516 877 B1

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008000015 A
- DE 10223780 C1
- DE 10042147 A1
- DE 10134294 A1